# EUROPÄISCHE PATENTSCHRIFT

(11) **EP 1 106 009 B1**
(45) Veröffentlichungstag und Bekanntmachung des Hinweises auf die Patenterteilung: **22.03.2006**
(21) Anmeldenummer: 99953540.4
(22) Anmeldetag: 19.08.1999
(51) Int. Cl.: H04M 1/725, H04Q 7/32

(54) **SCHALTUNG UND VERFAHREN ZUR AUFZEICHNUNG UND WIEDERGABE VON SPRACHE UND ANDEREN TÖNEN IN DIGITALEN MOBILFUNKGERÄTEN**
CIRCUIT AND METHOD FOR RECORDING AND REPRODUCING SPEECH AND OTHER SOUNDS IN DIGITAL MOBILE DEVICES
CIRCUIT ET PROCEDE D'ENREGISTREMENT ET DE LECTURE DE LA PAROLE ET D'AUTRES SONS DANS DES APPAREILS MOBILES NUMERIQUES

(30) Priorität: 19.08.1998 DE 19837652
(43) Veröffentlichungstag der Anmeldung: 13.06.2001
(73) Patentinhaber: Infineon Technologies AG, 81669 München (DE); SIEMENS AKTIENGESELLSCHAFT, 80333 München (DE)
(72) Erfinder: HEIN, Werner, D-81739 München (DE); STEGER, Johann, D-81547 München (DE); PAULUS, Jürgen, D-80538 München (DE)
(74) Vertreter: Lange, Thomas
(86) Internationale Anmeldenummer: PCT/DE1999/002606
(87) Internationale Veröffentlichungsnummer: WO 2000/011853

(56) Entgegenhaltungen:
- EP-A- 0 642 286
- EP-A- 0 725 499
- EP-A- 0 762 711
- EP-A- 0 798 908
- EP-A- 0 942 571
- GB-A- 2 332 130
- US-A- 5 583 915
- PATENT ABSTRACTS OF JAPAN vol. 017, no. 264 (E-1370), 24. Mai 1993 (1993-05-24) & JP 05 007181 A (SONY CORP), 14. Januar 1993 (1993-01-14)

## Beschreibung

Die vorliegende Erfindung betrifft eine Schaltung und ein Verfahren zur Aufzeichnung und Wiedergabe von Sprache und anderen Tönen in digitalen Mobilfunkgeräten.

Gemäß dem Stand der Technik wurden bisher zur Speicherung von Sprache in Mobilfunkgeräten die empfangenen Sprachdaten in digitaler Form in einem Speicher gespeichert, und später die entsprechenden Sprachdaten aus dem Speicher abgerufen und über den normalen empfangsseitigen Sprachdekoder des Mobilfunkgerätes und dessen Lautsprecher wiedergegeben bzw. vom Mobilfunkgerät über das eingebaute Mikrofon aufgenommene Sprache nach der üblichen Digitalisierung durch den normalen Sprachenkoder in digitaler Form im Speicher gespeichert und später aus dem Speicher gesendet.

In der europäischen Patentanmeldung EP 0 762 711 A2 ist ein Dual-Band-Mobiltelefon beschrieben, welches in einem analogen Modus und in einem digitalen Modus betrieben werden kann. Das Gerät weist ferner einen Speicher auf, in dem sowohl empfangene Sprachinformation als auch auszusendende Sprachinformation abgespeichert werden kann. Dabei wird durch eine geeignete Schaltung dafür gesorgt, daß die in dem Speicher abgelegten Daten stets in einer komprimierten Form vorliegen. Sollen empfangene Sprachsignale in dem Speicher abgespeichert werden, wird das demodulierte Sprachsignal entweder direkt (digitaler Modus) dem Speicher zugeführt oder (im analogen Modus) mit einer reduzierten Signalrate komprimiert und dann dem Speicher zugeleitet. Die Ausgabe der komprimierten Sprachdaten zum Lautsprecher des Mobilfunkgeräts erfolgt über einen Sprachdekodierer, zur Übertragung der abgespeicherten Sprachdaten über die Funkstrecke wird demgegenüber kein weiterer Sprachdekodierer benötigt.

Ein weiterer Stand der Technik ergibt sich aus der Siemens Firmware Dokumentation PMB 2800/2707, Seiten 121 bis 125.

Dieser Stand der Technik weist folgende Nachteile auf:

Das Datenformat ist abhängig vom verwendeten Sprachcode, außerdem können die Daten nur in der Form gespeichert werden, wie sie auch über Funk übertragen werden. Aufgrund der relativ hohen Störanfälligkeit des Funkweges müssen meist Fehlerkorrekturdaten zusätzlich enthalten sein, die den Speicherplatzbedarf unnötig erhöhen. Außerdem ist nachträglich keine weitere Komprimierung des Datensatzes gemäß dem Stand der Technik möglich. Außerdem ist im Stand der Technik auch keine Korrektur von gestört empfangenen Daten, die nach Speicherung gesendet werden sollen, möglich.

Es ist somit Aufgabe der vorliegenden Erfindung, ein wesentlich flexibleres Verfahren zur Sprachspeicherung in Mobilfunkgeräten und eine dafür geeignete Schaltung zur Verfügung zu stellen.

Vorzugsweise soll diese Sprachspeicherung (häufig auch als "Voice-Memo" bezeichnet) folgende Funktionen ermöglichen:
1. Verwendung des Mobilfunkgeräts als Diktaphon im sogenannten "Stand by"-Betrieb, d.h., wenn das Gerät eingeschaltet ist, ohne daß ein Gespräch stattfindet.
2. Im Gespräch soll es möglich sein, vorher aufgenommene Meldungen an den Gesprächspartner oder an sich selbst oder an beide auszugeben.
3. Weiter sollte es möglich sein, unterschiedliche Meldungen an den Gesprächspartner oder an sich selbst auszugeben.
4. Darüber hinaus sollte es möglich sein, im Gespräch nur den Gesprächspartner, nur sich selbst oder beide Parteien aufzunehmen.

Diese Aufgabe wird durch die Merkmale der Ansprüche 1 und 10 gelöst.

Dadurch kann die Speicherung der Sprachdaten in einem Speicherplatz-effizienteren Datenformat erfolgen.

Es ist dabei besonders bevorzugt, die Schaltung so auszugestalten, daß der Ausgang des zweiten Sprachdekodierers mit dem Lautsprecher des Mobilfunkgerätes verbunden ist. Auf diese Weise ist die Wiedergabe der gespeicherten Daten an den Benutzer des Mobilfunkgerätes verbessert.

Weiter ist es bevorzugt, bei der Schaltung noch einen weiteren, dritten Sprachdekodierer vorzusehen, dessen Eingang mit dem Speicher verbunden ist. Vorzugsweise wird dabei der Ausgang des dritten Sprachdekodierers mit dem Eingang des ersten Sprachkodierers verbunden. Dadurch ist ein sehr flexibler Abruf von gespeicherten Meldungen zum Senden möglich.

Es ist dabei besonders bevorzugt, daß der zweite Sprachkodierer über einen Summationspunkt sowohl mit dem Ausgang des empfangsseitigen, ersten Sprachdekodierers als auch mit dem Mikrofon des Mobilfunkgerätes verbunden ist. Auf diese Weise können sowohl empfangene Nachrichten als auch vom Benutzer des Mobilfunkgerätes aufgesprochene Nachrichten besonders vorteilhaft gespeichert werden.

Es ist dabei weiter bevorzugt, zwischen dem Ausgang des ersten Sprachdekodierers und dem Summationspunkt sowie dem Mikrofon und dem Summationspunkt jeweils einen regelbaren Verstärker zu schalten. Auf diese Weise kann während des Gesprächs sowohl das selbstgesprochene, als auch das von der Gegenstelle empfangene Signal zusammen gespeichert werden.

Die Regelbarkeit der Verstärker erlaubt auch eine sehr gute Anpassung der Aussteuerung.

Bei der erfindungsgemäßen Schaltung ist es weiter besonders bevorzugt, daß die Verbindung zwischen dem zweiten Sprachdekodierer und dem Lautsprecher über einen weiteren Summationspunkt erfolgt, dessen anderer Eingang mit dem Ausgang des ersten Sprachdekodierers verbunden ist. Dabei ist es besonders bevorzugt, zwischen dem Ausgang des zweiten Sprachdekodierers und dem weiteren Summationspunkt sowie zwischen dem Ausgang des ersten Sprachdekodierers und dem weiteren Summationspunkt jeweils einen regelbaren Verstärker zu schalten. Auf diese Weise ist auch die gleichzeitige Wiedergabe aus dem Speicher und das Abhören des aktuell empfangenen Signals möglich.

Bei der erfindungsgemäßen Schaltung ist es weiter besonders bevorzugt, daß die Verbindung zwischen dem dritten Sprachdekodierer und dem Eingang des sendeseitigen, ersten Sprachkodierers über einen zusätzlichen Summationspunkt erfolgt, dessen anderer Eingang mit dem Mikrofonausgang verbunden ist. Dabei ist es besonders bevorzugt, zwischen dem Ausgang des dritten Sprachdekodierers und dem zusätzlichen Summationspunkt sowie zwischen dem Mikrofonausgang und dem zusätzlichen Summationspunkt jeweils einen regelbaren Verstärker zu schalten. Auf diese Weise kann auch eine vorher gespeicherte Nachricht gesendet werden, die gleichzeitig aktuell kommentiert werden kann. Durch die regelbaren Verstärker läßt sich wieder eine geeignete Aussteuerung beider Signale erzielen.

Bei dem erfindungsgemäßen Verfahren ist es besonders bevorzugt, für die gespeicherten Sprachsignale andere Kodier- und Dekodierschaltungen zu verwenden als für die über die Funkstrecke übertragenen Sprachsignale.

Die vorliegende Erfindung wird im folgenden anhand des in den Zeichnungen dargestellten Ausführungsbeispiels näher beschrieben. Es zeigen:
Fig. 1 eine Schaltung zur Aufzeichnung und Wiedergabe von Sprache in digitalen Mobilfunkgeräten gemäß dem Stand der Technik;
Fig. 2 ein Prinzipschaltbild der erfindungsgemäßen Schaltung; und
Fig. 3 ein Prinzipschaltbild der vorliegenden Erfindung mit detaillierten Erläuterungen.

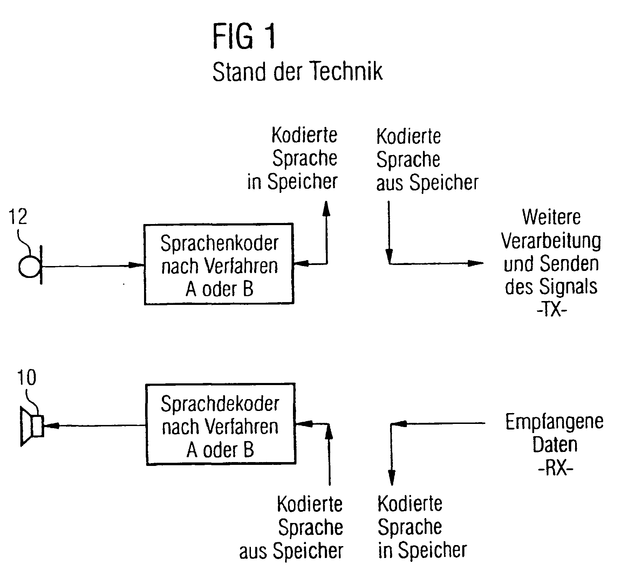

Fig. 1 zeigt zum besseren Verständnis der vorliegenden Erfindung den Stand der Technik. Dabei werden die empfangenen Daten entweder direkt am Lautsprecher 10 des Mobilfunkgerätes ausgegeben, oder in digitaler Form direkt gespeichert. Die direkt gespeicherten Daten können dann später aus dem Speicher aus dem normalen empfangsseitigen Sprachdekoder in Tonsignale umgewandelt werden. Probleme entstehen hier insbesondere, wenn das Mobilfunkgerät verschiedene Sprachkodierungen (Verfahren A oder Verfahren B) verarbeiten soll, und deshalb ein umschaltbarer Dekoder vorgesehen wird. Dann ist es stets nötig, dem im Speicher gespeicherten Sprachsignal den entsprechenden richtigen Code zuzuordnen. Dies erfordert eine relativ aufwendige Verwaltung.

Der Sendezweig eines konventionellen Mobilfunkgerätes gemäß dem Stand der Technik ist entsprechend aufgebaut. Das Mikrofon 12 ist mit dem Sprachenkoder verbunden. Von diesem gehen die entsprechenden digitalen Daten entweder direkt zum Senden oder in den Speicher. Aus dem Speicher können Daten zum Senden entnommen werden.

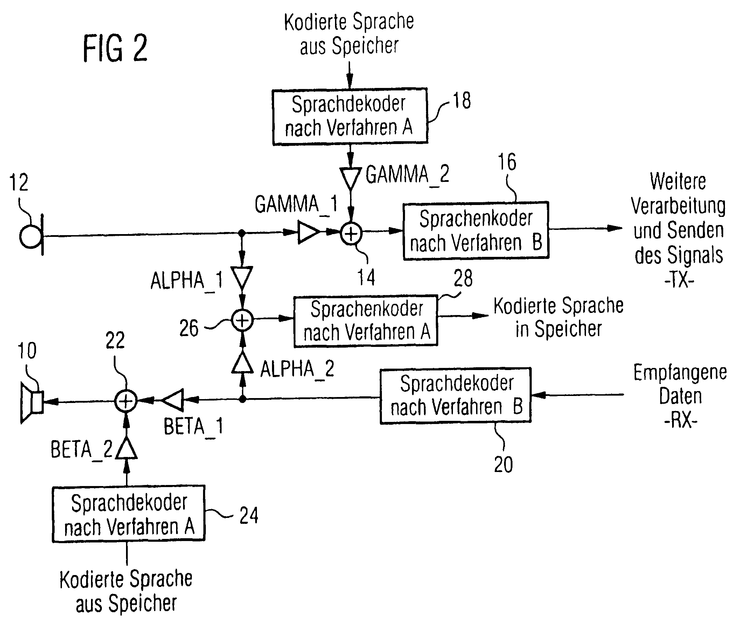

Fig. 2 zeigt demgegenüber ein Prinzipschaltbild der vorliegenden Erfindung. Die analogen Sprachsignale vom Mikrofon 12 des Mobilfunkgerätes werden zu zwei regelbaren Verstärkern Alpha.1 und Gamma.1 geführt. Der regelbare Verstärker Gamma.1 führt zu einem Summationsknoten 14. Von dort gelangt das analoge Signal wie üblich zum sendeseitigen Sprachenkoder 16 und von dort in digitaler Form zur weiteren Verarbeitung des Signals und zum Senden. An dem Summationspunkt 14 kann zum Senden einer aufgezeichneten Nachricht ein entsprechendes Signal zugeführt werden. Dieses Signal wird erzeugt, indem die in digitaler Form kodierte Sprache aus dem Speicher in den Sprachdekoder 18 eingelesen und dort in analoge Sprachsignale umgewandelt wird. Von dem Sprachdekoder 18 gelangen die Signale über einen regelbaren Verstärker Gamma.2 zu dem Summationspunkt 14 und von dort ebenfalls zu dem sendeseitigen Sprachenkoder 16. Da hier ein Summationspunkt 14 und zwei regelbare Verstärker Gamma.1 und Gamma.2 vorliegen, kann auch Sprache vom Mikrofon 12 mit einer gespeicherten Nachricht gemischt und so gesendet werden, wenn die regelbaren Verstärker Gamma.1 und Gamma.2 entsprechend eingestellt werden.

Die digital empfangenen Daten gelangen wie üblich zu einem empfangsseitigen Sprachdekoder 20. Sie werden dort in analoge Sprachsignale umgewandelt und einem regelbaren Verstärker Beta.1 zugeführt. Von dort gelangen sie zu einem weiteren Summationspunkt 22 und von dort zu dem Lautsprecher 10 des Mobilfunkgerätes. An dem Summationspunkt 22 werden aus dem Speicher abgerufene Sprachsignale zur Wiedergabe an den Benutzer eingespeist. Dazu werden die kodierten Sprachdaten aus dem Speicher einem Sprachdekoder 24 zugeführt. Von dort gelangen die entsprechenden analogen Sprachsignale zu einem weiteren regelbaren Verstärker Beta.2 und von dort zum Summationspunkt 22 und dem Lautsprecher 10.

Die Aufzeichnung von Sprache erfolgt entweder bei der Aufzeichnung von vom Benutzer aufgesprochenen Nachrichten über das Mikrofon 12, den nach dem Mikrofon 12 abzweigenden Signalpfad zu dem regelbaren Verstärker Alpha.1 und von dort zu einem weiteren Summationspunkt 26. Von dort gelangen die Signale zu einem weiteren Sprachenkoder 28, der die Sprachsignale in entsprechende digitale Daten umsetzt. Diese digitalen Daten werden dann im Speicher abgespeichert.

Zur Aufzeichnung empfangener Nachrichten steht ein weiterer Signalweg zur Verfügung, der nach dem empfangsseitigen Sprachdekoder 20 abzweigt. Er führt zu einem weiteren regelbaren Verstärker Alpha.2, dessen Ausgang ebenfalls mit dem Summationspunkt 26 verbunden ist. Von dort gelangen die analogen Signale ebenfalls zu dem Sprachenkoder 28 und von dort als digitale Daten in den Speicher.

Durch entsprechende Steuerung der regelbaren Verstärker Alpha.1 und Alpha.2 läßt sich einstellen, ob nur über das Mikrofon 12 gesprochene Sprache, oder nur empfangene Sprache aus dem empfangsseitigen Sprachdekoder 20 gespeichert werden soll, oder ob sowohl das örtliche als auch das entfernte Sprachsignal gemeinsam aufgezeichnet werden soll. Durch entsprechende Regelung der Verstärker Alpha.1 und Alpha.2 kann dabei noch eine entsprechende Abstimmung der Lautstärke des örtlichen Sprachsignals und des empfangenen Sprachsignals bewirkt werden.

Mit der hier beschriebenen Schaltung ist es möglich, völlig unterschiedliche Kodierungsverfahren für die zu speichernden digitalen Sprachdaten und für die über Funkstrecke übertragenen Sprachdaten zu benutzen. Die Kodierung und Dekodierung für die auf dem Funkweg übertragenen Signale erfolgt durch den Sprachenkoder 16 bzw. den Sprachdekoder 20. Demgegenüber werden die in den Speicher gelangenden Sprachsignale über den Sprachenkoder 28 verschlüsselt und durch die beiden Sprachdekoder 18 und 24 entschlüsselt.

Gegebenenfalls kann auf den Sprachdekoder 18 und die zugehörigen Verstärker Gamma.1 und Gamma.2 sowie auf den Summationspunkt 14 verzichtet werden, wenn es nicht erforderlich ist, gespeicherte Nachrichten auch zu senden.

Die unterschiedlichen Kodierungsverfahren sind in der Zeichnung durch "Verfahren A" (das interne Kodierungsverfahren des Mobilfunkgerätes) und "Verfahren B" (das Kodierungsvefahren für den Funkweg) bezeichnet.

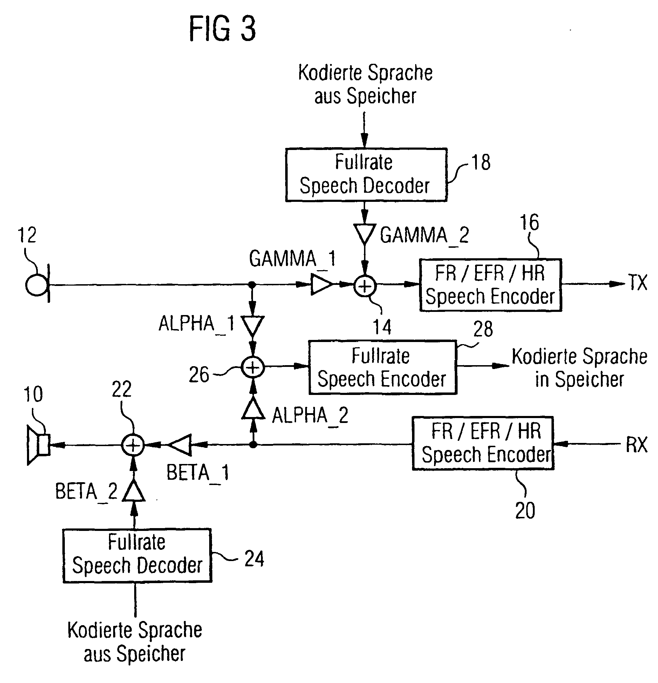

Fig. 3 zeigt ein Schaltbild der tatsächlichen Ausführungsform der Erfindung. Im Speicher wird die Sprache stets in dem Fullrate-Code gespeichert. Deshalb ist der Kodierer 28 ein Fullrate-Speech-Enkoder während die Dekodierer 18 und 24 als Fullrate-Speech-Dekoder ausgeführt sind. Der sendeseitige Sprachkodierer 16 kann beispielsweise zwischen verschiedenen Betriebsarten (Fullrate = FR, Enhanced Fullrate = EFR und Halfrate = HR) umgeschaltet werden. Ebenso kann der empfangsseitige Sprachdekodierer 20 zwischen diesen drei Betriebsarten umgeschaltet werden. Trotzdem liegen die Daten im Speicher immer in der gleichen Form vor.

Die vorliegende Erfindung vermag also folgende Betriebsarten auszuführen:

### 1. Aufnahme in Stand by-Betrieb:

Aufnahme einer vom Benutzer gesprochenen Meldung über das Mikrofon 12. Hierzu wird der regelbare Verstärker Alpha.1 auf 1 und der regelbare Verstärker Alpha.2 auf 0 gesetzt. Die beiden Signalpfade TX und RX sind außer Betrieb.

### 2. Aufnahme während eines Telefongesprächs:

Die beiden regelbaren Verstärker Gamma.1 und Beta.1 sind auf 1 gesetzt. Die beiden regelbaren Verstärker Gamma.2 und Beta.2 sind auf 0 gesetzt. Durch Einstellung der beiden regelbaren Verstärker Alpha.1 und Alpha.2 ist eine selektive Aufnahme möglich:
a) Alpha.1 = 1, Alpha.2 = 0: Es wird nur das vom Benutzer Gesprochene aufgenommen.
b) Alpha.1 = 0, Alpha.2 = 1: Es wird nur der entfernte Gesprächspartner aufgenommen. Zusätzlich kann hier am Anfang der Aufzeichnung Gamma.2 auf ≠0 gesetzt werden, und so ein Hinweis aus dem Speicher an den entfernten Teilnehmer gesandt werden, beispielsweise darüber, daß das Gespräch mitgeschnitten wird.
c) Alpha.1 ≠ 0, Alpha.2 ≠ 0: Hierbei werden beide Sprecher aufgenommen, wobei durch die entsprechende Einstellung von Alpha.1 und Alpha.2 zwischen 0 und 1 eine entsprechende Aussteuerung der beiden Sprachsignale erzielt werden kann, so daß die Sprache des lokalen und des entfernten Teilnehmers etwa gleichlaut klingt. Auch hier ist am Anfang der Aufzeichnung durch Ansteuern von Gamma.2 ≠0 die Ausgabe eines Hinweises an den entfernten Gesprächspartner möglich.

### 3. Wiedergabe von aufgezeichneter Sprache während des Telefongesprächs: Durch Einstellung der regelbaren Verstärker Gamma.1, Gamma.2 und Beta.1, Beta.2 ist eine gewichtete Ausgabe von Signalen möglich:

a) Mittels Einstellung von Gamma.1 und Gamma.2 kann bestimmt werden, was an den entfernten Teilnehmer geschickt wird:
   aa)Gamma.1 ≠0, Gamma.2 ≠0: Übertragung des aktuell vom lokalen Teilnehmer Gesprochenen, zusammen mit der zuvor gespeicherten Meldung.
   ab) Gamma.1 = 0, Gamma.2 ≠0: Ausgabe nur der zuvor gespeicherten Meldung.
b) Die Einstellungen von Beta.1 und Beta.2 beeinflussen das, was der örtliche Teilnehmer selbst hört:
   ba) Beta.1 ≠0, Beta.2 ≠0: Ausgabe des empfangenen Signals und der zuvor gespeicherten Meldung.
   bb) Beta.1 = 0, Beta.2 ≠ 0: Ausgabe nur der zuvor gespeicherten Meldung.

Hierbei können die Punkte 3a und 3b beliebig frei kombiniert werden.

Vorteilhafterweise muß also bei der vorliegenden Erfindung das Verfahren zur Sprachkodierung- und dekodierung des zu speichernden Signals nicht zwingend mit dem Verfahren übereinstimmen, daß zur Kodierung und Dekodierung des Sende- und Empfangssignals verwendet wird.

Das im GSM-Mobilfunk verwendete DTX-Verfahren (Discontinuous Transmission) kann bei der Kodierung zur Sprachspeicherung ausgenutzt werden, um nachträglich eine weitere Komprimierung des Datensatzes zu erzielen. Hierdurch wird bei begrenzter Aufnahmekapazität, d.h. begrenzten Speicherplatz, eine im Mittel erhöhte Aufnahmedauer erzielen.

Da die Aufzeichnung des empfangenen Signals die Signale nach der normalen Sprachdekodierung abgreift, liegt immer ein korrigiertes Sprachsignal vor. Hierdurch werden selbst gestört empfangene Signale korrekt aufgezeichnet.

## Patentansprüche

1. Schaltung zur Aufzeichnung und Wiedergabe von Sprache und anderen Tönen in digitalen Mobilfunkgeräten, mit
- einem im Sendesignalpfad angeordneten ersten Sprachkodierer (16) zum Kodieren eines über eine Funkstrecke zu übertragenden Sprachsignals,
- einem im Empfangssignalpfad angeordneten ersten Sprachdekodierer (20) zum Dekodieren eines über die Funkstrecke erhaltenen Sprachsignals,
- einem Speicher zum Aufzeichen von Sprachsignalen,
- einem zweiten Sprachkodierer (28), dessen Ausgang mit dem Speicher verbunden ist, **gekennzeichnet durch**
- einen zweiten Sprachdekodierer (24), dessen Eingang mit dem Speicher verbunden ist, wobei die Schaltung derart ausgelegt ist, daß
- im Speicher abzuspeichernde Sprachsignale, welche über die Funkstrecke erhalten wurden, stets von dem ersten Sprachdekodierer (20) dekodiert und anschließend von dem zweiten Sprachkodierer (28) kodiert werden, und
- aus dem Speicher an einen Lautsprecher (10) des Mobilfunkgerätes auszugebende Sprachsignale von dem zweiten Sprachdekodierer (24) dekodiert werden.

2. Schaltung nach Anspruch 1, **dadurch** gekenn-zeichnet, daß noch ein dritter Sprachdekodierer (18) vorgesehen ist, dessen Eingang mit dem Speicher verbunden ist.

3. Schaltung nach Anspruch 2, **dadurch** gekenn-zeichnet, daß der Ausgang des dritten Sprachdekodierers (18) mit dem Eingang des ersten Sprachkodierers (16) verbunden ist.

4. Schaltung nach einem der Ansprüche 1 bis 3, **dadurch gekennzeichnet, daß** der zweite Sprachkodierer (28) über einen ersten Summationspunkt (26) sowohl mit dem Ausgang des ersten Sprachdekodierers (20) als auch mit einem Mikrofon (12) des Mobilfunkgeräts verbunden ist.

5. Schaltung nach Anspruch 4, **dadurch gekennzeichnet, daß** zwischen dem Ausgang des ersten Sprachdekodierers (20) und dem ersten Summationspunkt (26) sowie dem Mikrofon (12) und dem ersten Summationspunkt (26) jeweils ein regelbarer Verstärker (Alpha.1, Alpha.2) geschaltet ist.

6. Schaltung nach Anspruch 1,
**dadurch gekennzeichnet, daß** die Verbindung zwischen dem zweiten Sprachdekodierer (24) und dem Lautsprecher (10) über einen weiteren Summationspunkt (22) erfolgt, dessen anderer Eingang mit dem Ausgang des ersten Sprachdekodierers (20) verbunden ist.

7. Schaltung nach Anspruch 6, **dadurch gekennzeichnet, daß** zwischen dem Ausgang des zweiten Sprachdekodierers (24) und dem weiteren Summationspunkt (22) sowie zwischen dem Ausgang des ersten Sprachdekodierers (20) und dem weiteren Summationspunkt (22) jeweils ein regelbarer Verstärker (Beta.1, Beta.2) geschaltet ist.

8. Schaltung nach Anspruch 3,
**dadurch gekennzeichnet, daß** die Verbindung zwischen dem dritten Sprachdekodierer (18) und dem Eingang des ersten Sprachkodierers (16) über.einen zusätzlichen Summationspunkt (14) erfolgt, dessen anderer Eingang mit dem Mikrofon (12) verbunden ist.

9. Schaltung nach Anspruch 8, **dadurch gekennzeichnet, daß** zwischen dem Ausgang des dritten Sprachdekodierers (18) und dem zusätzlichen Summationspunkt (14) sowie zwischen dem Mikrofon (12) und dem zusätzlichen Summationspunkt (14) jeweils ein regelbarer Verstärker (Gamma.1, Gamma.2) geschaltet ist.

10. Verfahren zur Aufzeichnung und Wiedergabe von Sprache und anderen Tönen in digitalen Mobilfunkgeräten, in denen die Sprache digital kodiert übertragen wird und eine Möglichkeit zur Speicherung von Sprachsignalen vorgesehen ist,
**dadurch gekennzeichnet, daß** zum Sprachkodieren und Sprachdekodieren der gespeicherten Sprachsignale stets ein von dem zum Sprachkodieren und Sprachdekodieren von über eine Funkstrecke übertragener Sprachsignale unabhängiges Verfahren angewendet wird.

11. Verfahren nach Anspruch 10, **dadurch gekennzeichnet, daß** für die gespeicherten Sprachsignale andere Sprachkodier- und Sprachdekodierschaltungen (18, 24, 28) verwendet werden als für die über die Funkstrecke übertragenen Sprachsignale.

## Claims

1. Circuit for recording and playing back voice and other sounds in digital mobile radio devices, having
- a first voice encoder (16), arranged in the transmit signal path, for encoding a voice signal to be transmitted via a radio link,
- a first voice decoder (20), arranged in the receive signal path, for decoding a voice signal received via the radio link,
- a memory for recording voice signals,
- a second voice encoder (28) whose output is connected to the memory, **characterized by**
- a second voice decoder (24) whose input is connected to the memory, the circuit being configured in such a way that
- voice signals which are to be stored in the memory and which are obtained via the radio link are always decoded by the first voice decoder (20) and subsequently encoded by the second voice encoder (28), and
- voice signals which are to be output from the memory to a loudspeaker (10) of the mobile radio device are decoded by the second voice decoder (24).

2. Circuit according to Claim 1, **characterized in that** a third voice decoder (18) whose input is connected to the memory is also provided.

3. Circuit according to Claim 2, **characterized in that** the output of the third voice decoder (18) is connected to the input of the first voice encoder (16).

4. Circuit according to one of Claims 1 to 3, **characterized in that** the second voice encoder (28) is connected via a first summing point (26) both to the output of the first voice decoder (20) and to a microphone (12) of the mobile radio device.

5. Circuit according to Claim 4, **characterized in that** in each case a controllable amplifier (Alpha.1, Alpha.2) is connected between the output of the first voice decoder (20) and the first summing point (26) and the microphone (12) and the first summing point (26).

6. Circuit according to Claim 1, **characterized in that** the connection between the second voice decoder (24) and the loudspeaker (10) is made via a further summing point (22) whose other input is connected to the output of the first voice decoder (20).

7. Circuit according to Claim 6, **characterized in that** in each case a controllable amplifier (Beta.1, Beta.2) is connected between the output of the second voice decoder (24) and the further summing point (22), and between the output of the first voice decoder (20) and the further summing point (22).

8. Circuit according to Claim 3, **characterized in that** the connection between the third voice decoder (18) and the input of the first voice encoder (16) is made via an additional summing point (14) whose other input is connected to the microphone (12).

9. Circuit according to Claim 8, **characterized in that** in each case a controllable amplifier (Gamma.1, Gamma.2) is connected between the output of the third voice decoder (18) and the additional summing point (14), and between the microphone (12) and the additional summing point (14).

10. Method for recording and playing back voice and other sounds in digital mobile radio devices in which the voice is transmitted in digitally encoded form and a possibility for storing voice signals is provided, **characterized in that** a method which is independent of that for encoding and decoding voice signals which are transmitted via a radio link is used for encoding and decoding the stored voice signals.

11. Method according to Claim 10, **characterized in that** different voice encoding and voice decoding circuits (18, 24, 28) are used for the stored voice signals than for the voice signals transmitted via the radio link.

## Revendications

1. Circuit d'enregistrement et de lecture de paroles et d'autres sons dans des équipements numériques de radiocommunication mobile, comportant :
- un premier codeur de parole (16) placé dans la voie de signal d'émission pour coder un signal vocal à transmettre par l'intermédiaire d'une voie radioélectrique,
- un premier décodeur de parole (20) placé dans la voie de signal de réception pour décoder un signal vocal obtenu par l'intermédiaire de la voie radioélectrique,
- une mémoire pour enregistrer des signaux vocaux,
- un deuxième codeur de parole (28) dont la sortie est reliée à la mémoire, **caractérisé par**
- un deuxième décodeur de parole (24) dont l'entrée est reliée à la mémoire, le circuit étant conçu de telle sorte que
- des signaux vocaux qui sont à mémoriser dans la mémoire et qui ont été obtenus par l'intermédiaire de la voie radioélectrique sont toujours décodés par le premier décodeur de parole (20) puis codés par le deuxième codeur de parole (28), et
- des signaux vocaux issus de la mémoire et à fournir à un haut-parleur (10) de l'équipement de radiocommunication mobile sont décodés par le deuxième décodeur de parole (24).

2. Circuit selon la revendication 1, **caractérisé par le fait qu'**il est prévu encore un troisième décodeur de parole (18) dont l'entrée est reliée à la mémoire.

3. Circuit selon la revendication 2, **caractérisé par le fait que** la sortie du troisième décodeur de parole (18) est reliée à l'entrée du premier codeur de parole (16).

4. Circuit selon l'une des revendications 1 à 3, **caractérisé par le fait que** le deuxième codeur de parole (28) est relié par l'intermédiaire d'un premier point d'addition (26) aussi bien à la sortie du premier décodeur de parole (20) qu'à un microphone (12) de l'équipement de radiocommunication mobile.

5. Circuit selon la revendication 4, **caractérisé par le fait qu'**un amplificateur réglable (Alpha.1, Alpha.2) est branché à chaque fois entre la sortie du premier décodeur de parole (20) et le premier point d'addition (26) ainsi qu'entre le microphone (12) et le premier point d'addition (26).

6. Circuit selon la revendication 1, **caractérisé par le fait que** la liaison entre le deuxième décodeur de parole (24) et le haut-parleur (10) s'effectue par l'intermédiaire d'un autre point d'addition (22) dont l'autre entrée est reliée à la sortie du premier décodeur de parole (20).

7. Circuit selon la revendication 6, **caractérisé par le fait qu'**un amplificateur réglable (Beta.1, Beta.2) est branché à chaque fois entre la sortie du deuxième décodeur de parole (24) et l'autre point d'addition (22) ainsi qu'entre la sortie du premier décodeur de parole (20) et l'autre point d'addition (22).

8. Circuit selon la revendication 3, **caractérisé par le fait que** la liaison entre le troisième décodeur de parole (18) et l'entrée du premier codeur de parole (16) s'effectue par l'intermédiaire d'un point d'addition supplémentaire (14) dont l'autre entrée est reliée au microphone (12).

9. Circuit selon la revendication 8, **caractérisé par le fait qu'**un amplificateur réglable (Gamma.1, Gamma.2) est branché à chaque fois entre la sortie du troisième décodeur de parole (18) et le point d'addition supplémentaire (14) ainsi qu'entre le microphone (12) et le point d'addition supplémentaire (14).

10. Procédé d'enregistrement et de lecture de paroles et. d'autres sons dans des équipements numériques de radiocommunication mobile dans lesquels la parole est transmise sous forme codée et numérique et dans lesquels il est prévu une possibilité de mémoriser des signaux vocaux, **caractérisé par le fait que**, pour le codage et décodage de paroles des signaux vocaux mémorisés, on utilise toujours un procédé indépendant de celui destiné au codage et décodage de paroles de signaux vocaux transmis par l'intermédiaire d'une voie radioélectrique.

11. Procédé selon la revendication 10, **caractérisé par le fait que**, pour les signaux vocaux mémorisés, on utilise d'autres circuits de codage et décodage de paroles (18, 24, 28) que pour les signaux vocaux transmis par l'intermédiaire de la voie radioélectrique.
